(19) Europäisches Patentamt

European Patent Office

Office européen des brevets

(11) **EP 1 624 175 A1**

(12) **DEMANDE DE BREVET EUROPEEN**

(43) Date de publication:
**08.02.2006 Bulletin 2006/06**

(51) Int Cl.:
*F02D 41/22* (2006.01)   *F02D 23/02* (2006.01)

(21) Numéro de dépôt: **05300592.2**

(22) Date de dépôt: **13.07.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **03.08.2004 FR 0408582**

(71) Demandeur: **Renault s.a.s.**
**92100 Boulogne Billancourt (FR)**

(72) Inventeurs:
• **Leprieur, Laurent**
**91470, Limours (FR)**

• **Petit, Clément**
**93310, Le Pre St. Gervais (FR)**
• **Pineau, Antoine**
**92190, Meudon (FR)**

(74) Mandataire: **Rougemont, Bernard**
**RENAULT TECHNOCENTRE**
**Département Propriété Intellectuelle**
**Sce 00267 TCR GRA 2 36**
**1, avenue du Golf**
**78288 Guyancourt cedex (FR)**

(54) **Procédé et système de surveillance de la pression de suralimentation en air d'un moteur à combustion interne de véhicule automobile**

(57) Système et Procédé de surveillance de la pression de suralimentation en air d'un moteur à combustion interne de véhicule automobile équipé d'un ensemble turbocompresseur de suralimentation destiné à accroître la pression d'admission des gaz dans le moteur, et d'une unité de commande électronique. On détecte la présence ou l'absence d'un problème d'excès ou de manque de pression de suralimentation en air du moteur, à partir d'écarts ($E_X$, $E_Y$) entre la valeur absolue ($|\Delta P|$) de la différence ($\Delta P$) entre la pression de consigne ($P_{cons}$) et la pression d'admission ($P_{adm}$), et respectivement une première pression prédéterminée (X) ou une deuxième pression prédéterminée (Y).

FIG.1

## Description

La présente invention concerne un système et un procédé de surveillance de la pression de suralimentation en air d'un moteur à combustion interne de véhicule automobile.

La suralimentation en air d'un moteur permet d'augmenter les performances du moteur en admettant une masse d'air plus conséquente pour la combustion du carburant. Un tel système comprend généralement un ensemble turbocompresseur de suralimentation comprenant un compresseur et une turbine à géométrie variable. Le compresseur alimente le moteur en air à une pression supérieure à la pression atmosphérique et la turbine est traversée par les gaz d'échappement issus du moteur.

Un ensemble turbocompresseur comprend une turbine et un compresseur ayant pour but d'augmenter la quantité d'air admise dans les cylindres du moteur. La puissance fournie par les gaz d'échappement à la turbine peut être modulée en installant une soupape de décharge ou en prévoyant une turbine munie d'ailettes à orientation variable de façon à constituer un turbocompresseur à géométrie variable (TGV).

Le compresseur est monté sur un axe mécanique recevant également la turbine de sorte que le compresseur comprime l'air qui entre dans le répartiteur d'admission.

Un échangeur de chaleur peut être placé entre le compresseur et le répartiteur d'admission du moteur afin de refroidir l'air comprimé à la sortie des compresseurs.

Des actionneurs sont utilisés pour piloter l'ouverture et la fermeture des soupapes de décharge ou l'orientation des ailettes de la turbine de façon à modifier la géométrie de ladite turbine. Les signaux de commande de ces actionneurs sont fournis par l'unité de commande électronique.

Des systèmes de surveillance de la pression de suralimentation en air d'un moteur à partir d'un signal mesurant la pression dans le collecteur d'admission existent.

Cependant, ces systèmes ne sont prévus que pour une vitesse de rotation du moteur et un débit de carburant injecté chacun supérieur à un seuil respectif.

Ces méthodes de diagnostic sont simples, mais peu efficaces, car elles ne permettent de détecter un incident de suralimentation que lorsqu'il dure au moins un certain temps.

Aussi, au vu de ce qui précède, l'invention permet notamment de détecter des problèmes d'excès ou de manque de pression de suralimentation du moteur, de manière fiable, quel que soit le fonctionnement du moteur.

L'invention permet également de fournir des informations sur les problèmes de suralimentation survenus lors des roulages du véhicule.

Ainsi, selon un aspect de l'invention, il est proposé un système de surveillance de la pression de suralimentation en air d'un moteur à combustion interne de véhicule automobile équipé d'un ensemble turbocompresseur de suralimentation destiné à accroître la pression d'admission des gaz dans le moteur, et d'une unité de commande électronique. Le système comprend :

- un module de détermination en continu de la pression d'admission des gaz du moteur, par exemple un capteur de pression ou un estimateur de pression ;
- un premier module de calcul apte à calculer la valeur absolue de la différence entre la pression de consigne et la pression d'admission ;
- un deuxième module de calcul apte à calculer un premier écart entre ladite valeur absolue et une première pression prédéterminée ; et
- un premier module d'intégration apte à calculer une première somme d'un rapport du maximum entre un premier écart et zéro, et de ladite pression de consigne.

Le système permet de tenir compte d'une suite de dits premiers écarts successifs dans la détection d'excès, ou surplus, de pression de suralimentation, sans durée minimale de suite d'écarts successifs, et quel que soit le fonctionnement du moteur (vitesse de rotation, débit de carburant injecté).

Dans un mode de réalisation préféré, le système comprend en outre :

- un troisième module de calcul apte à calculer un deuxième écart entre ladite valeur absolue et une deuxième pression prédéterminée inférieure à ladite première pression prédéterminée ; et
- un deuxième module d'intégration apte à calculer une deuxième somme d'un rapport du maximum entre un deuxième écart et zéro, et de ladite pression de consigne.

Le système permet également de détecter un manque de pression de suralimentation en air du moteur.

En outre, le système comprend un module de réinitialisation à zéro desdites première et deuxième sommes lorsque ladite valeur absolue est nulle, après traitement desdites sommes, ou lorsque la pression de consigne est instable.

Dans un mode de réalisation préféré, le système comprend un premier module de comparaison apte à comparer une dite première ou deuxième somme avec un seuil de somme respectif prédéterminé, et de déterminer respectivement un incident d'excès ou de manque de pression de suralimentation en air du moteur.

Le système détecte un incident d'excès ou de manque de pression de suralimentation en air du moteur.

Dans un mode réalisation avantageux, le système comprend :

- un module de mémorisation ;
- un module de mise à jour de données mémorisées dans le module de mémorisation ;
- un premier compteur représentant le nombre d'incidents détectés d'excès de pression de suralimentation en air du moteur lors de l'actuel roulage, ledit premier compteur étant initialisé à zéro au début de chaque roulage du véhicule, et mis à jour par le module de mise à jour durant chaque roulage du véhicule ; et
- un deuxième compteur représentant le nombre d'incidents détectés de manque de pression de suralimentation en air du moteur lors de l'actuel roulage, ledit deuxième compteur étant initialisé à zéro au début de chaque roulage du véhicule et mis à jour par le module de mise à jour durant chaque roulage du véhicule.

En outre, le système comprend un deuxième module de comparaison, apte à détecter un problème d'excès de pression de suralimentation lorsque ledit premier compteur dépasse une première valeur de compteur maximale prédéterminée, et apte à détecter un problème de manque de pression de suralimentation lorsque ledit deuxième compteur dépasse une deuxième valeur de compteur maximale prédéterminée.

Avantageusement, le système comprend un dispositif d'alarme apte à se déclencher lors de la détection par le deuxième module de comparaison d'un problème d'excès ou de manque de pression de suralimentation, pour prévenir le conducteur du véhicule, et un module de commande de fonctionnement du moteur dans un mode dégradé après la détection par le deuxième module de comparaison d'un problème d'excès ou de manque de pression de suralimentation.

Le dispositif d'alarme peut par exemple, être un voyant pouvant être éclairé en cas de problème détecté, ou un message d'un dispositif à synthèse vocale synthèse vocale pouvant être déclenché à destination du conducteur.

Dans un mode de réalisation préféré, le module de mise à jour est, en outre, apte, durant chaque roulage du véhicule, à mettre à jour :

- une valeur maximale de ladite première somme calculée, une valeur absolue maximale correspondante de premier écart et un kilométrage associé du véhicule ; et
- une valeur maximale de ladite deuxième somme calculée, une valeur absolue maximale correspondante de deuxième écart et un kilométrage associé du véhicule ;

ledit module de réinitialisation réinitialisant à zéro lesdites valeurs au début de chaque roulage du véhicule.

En outre, le module de mise à jour est apte à mettre à jour :

- une valeur maximale de la valeur maximale de ladite première somme calculée, et le kilométrage associé du véhicule ; et
- une valeur maximale de la valeur maximale de ladite deuxième somme calculée, et le kilométrage associé du véhicule.

Avantageusement, le module de mise à jour est, en outre, apte à mettre à jour :

- une valeur maximale du premier compteur, et le kilométrage associé du véhicule ; et
- une valeur maximale du deuxième compteur, et le kilométrage associé du véhicule.

Par exemple, lesdites valeurs prédéterminées et lesdits compteurs sont mémorisés dans le module de mémorisation.

Il est également proposé, selon l'invention, un procédé de surveillance de la pression de suralimentation en air d'un moteur à combustion interne de véhicule automobile équipé d'un ensemble turbocompresseur de suralimentation destiné à accroître la pression d'admission des gaz dans le moteur, et d'une unité de commande électronique. On détecte la présence ou l'absence d'un problème d'excès ou de manque de pression de suralimentation en air du moteur, à partir d'écarts entre la valeur absolue de la différence entre la pression de consigne et la pression d'admission, et respectivement une première pression prédéterminée ou une deuxième pression prédéterminée.

D'autres buts, caractéristiques et avantages de l'invention apparaîtront à la lecture de la description suivante, donnée uniquement à titre d'exemple nullement limitatif, et faite en référence aux dessins annexés sur lesquels :

- la figure 1 est une vue schématique d'un mode de réalisation d'un système selon un aspect de l'invention ;
- la figure 2 illustre un exemple de fonctionnement du moteur avec des problèmes de suralimentation ;
- la figure 3 illustre un exemple de détection d'un excès de pression de suralimentation en air du moteur, selon l'invention ; et
- la figure 4 illustre un exemple de détection d'un manque de pression de suralimentation en air du moteur, selon l'invention

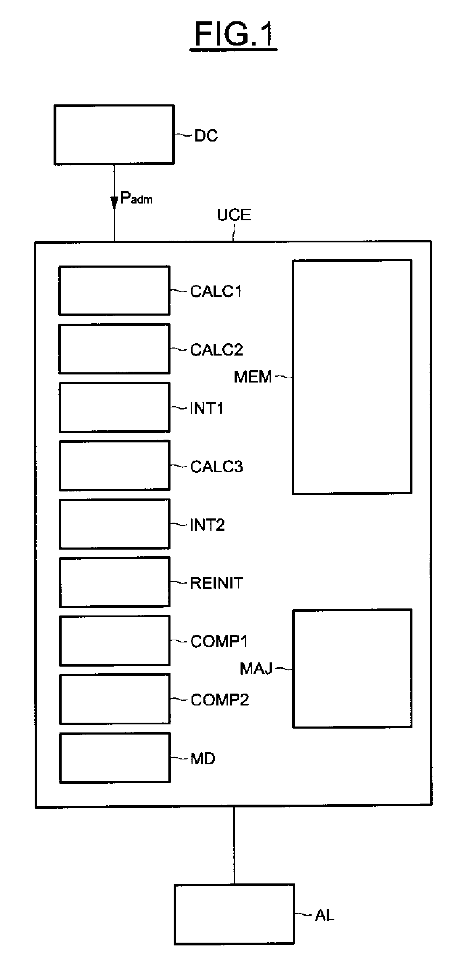

Sur la figure 1 est représenté un module DC de détermination en continu de la pression d'admission $P_{adm}$ des gaz dans le collecteur d'admission d'un moteur à combustion interne de véhicule automobile. Le module DC délivre en continu une mesure de la pression d'admission $P_{adm}$ des gaz du moteur à une unité de commande électronique UCE embarqué à bord du véhicule.

L'unité de commande électronique UCE comprend un premier module de calcul CALC1, un deuxième module de calcul CALC2, et un premier module d'intégration INT1. De plus, l'unité de commande électronique UCE comprend un troisième module de calcul CALC3, un deuxième module d'intégration INT2, un module de mémorisation MEM, un module de réinitialisation REINIT, un module de mise à jour MAJ, ainsi qu'un module MD de commande de fonctionnement du moteur dans un mode dégradé après la détection d'un problème d'excès ou de manque de pression de suralimentation. L'unité de commande électronique UCE comprend également un premier module de comparaison COMP1 et un deuxième module de comparaison COMP2. En outre, le système comprend dispositif d'alarme AL pour prévenir le conducteur en cas de détection d'un problème de suralimentation. L'alarme peut être un voyant lumineux qui est éclairé en cas de problème de suralimentation, ou bien un dispositif à synthèse vocale comprenant une ou deux phrases d'alarme synthétisées pour ce problème de suralimentation.

Le système représenté sur la figure 1 permet de détecter un incident d'excès de pression de suralimentation, ainsi qu'un incident de manque de pression de suralimentation.

Le module de mémorisation MEM permet notamment de mémoriser des informations permettant de faire un diagnostic précis de ce qui s'est passé lors du présent roulage, ainsi que lors des roulages antérieurs, en ce qui concerne d'éventuels problèmes d'excès ou de manque de pression de suralimentation.

Le module de mise à jour MAJ permet de mettre à jour des données mémorisées dans le module de mémorisation MEM.

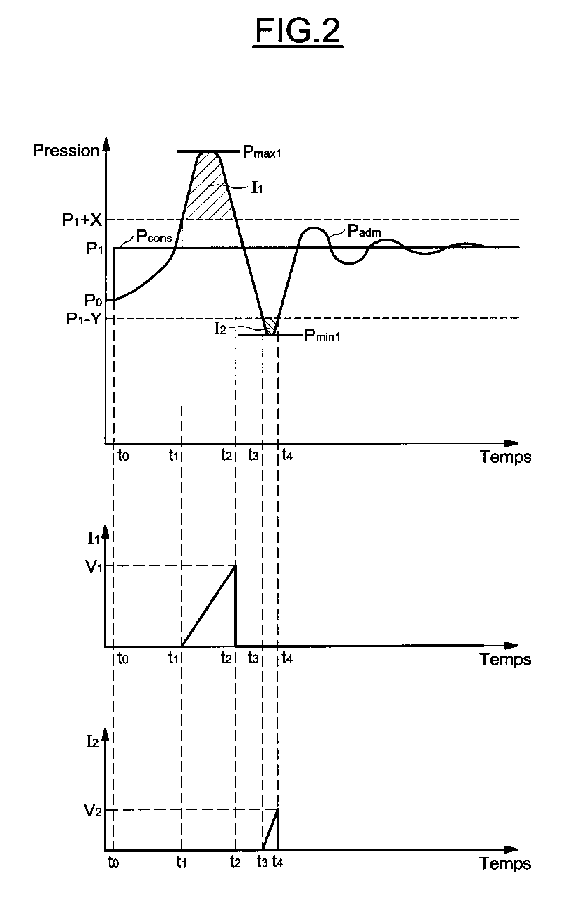

Sur la figure 2 est représenté un exemple de fonctionnement du moteur, pour lequel à un instant $t_0$, la consigne $P_{cons}$ de pression d'admission des gaz du moteur passe d'une valeur $P_0$ à une valeur $P_1$. L'évolution de la pression d'admission $P_{adm}$ est représentée sur la figure 2. Sont également représentées les horizontales de valeurs $P_1+X$ et $P_1-Y$, X et Y étant respectivement une première et une deuxième pressions prédéterminée.

Sur cet exemple, la courbe de pression d'admission $P_{adm}$ passe par une valeur maximale $P_{max1}$ supérieure à $P_1=X$ puis par une valeur minimale $P_{min1}$, inférieure à $P_1-Y$.

La pression d'admission $P_{adm}$ est supérieure à la valeur $P_1+X$ à partir d'un instant $t_1$, et jusqu'à un instant $t_2$. Ensuite, la pression d'admission $P_{adm}$ décroît, jusqu'à être inférieure à la valeur $P_1-Y$ entre les instants $t_3$ et $t_4$. Enfin, la pression d'admission $P_{adm}$ converge vers la pression de consigne valant $P_1$.

Le premier module de calcul CALC1 est capable de calculer la valeur absolue $|\Delta P|$ de la différence $\Delta P$ entre la pression de consigne $P_{cons}$ et la pression d'admission $P_{adm}$.

En d'autres termes, on a : $\Delta P = P_{cons} - P_{adm}$

Le module de calcul CALC2 calcule en continu un premier écart $E_X$ entre la valeur absolue $|\Delta P|$ et la première pression prédéterminée X :

$$E_X = |\Delta P| - X$$

Dans l'exemple décrit, toutes les variables à mémoriser sont mémorisées dans le module de mémorisation MEM.

Le premier module d'intégration INT1 calcule une première somme ou intégrale $I_1$ d'un rapport du maximum entre un premier écart $E_X$ et zéro, et de la pression de consigne $P_{cons}$ :

$$I_1 = \int \frac{Max(E_X,0)}{P_{cons}} \, dt$$

Dans cet exemple, le maximum $Max(E_x,0)$ est différent de zéro uniquement entre les instants $t_1$ et $t_2$, donc on a :

$$I_1 = \int_{t_1}^{t_2} \frac{Max(E_X,0)}{P_{cons}} \, dt$$

Le calcul de la première somme $I_1$ est représenté sur le deuxième graphe de la figure 2, ou elle croît de 0 jusqu'à une valeur V1 atteinte à l'instant $t_2$.

Le troisième module de calcul CALC3 calcule un deuxième écart Ey entre la valeur absolue $|\Delta P|$ et une deuxième pression prédéterminée Y inférieure à la première pression prédéterminée X :

$$E_Y = |\Delta P| - Y$$

Le deuxième module d'intégration INT2 calcule une deuxième somme $I_2$ d'un rapport du maximum entre un deuxième écart $E_Y$ et zéro, et de la pression de consigne $P_{cons}$ :

$$I_2 = \int \frac{Max(E_Y,0)}{P_{cons}} \, dt$$

Dans cet exemple, le maximum $Max(E_Y,0)$ est différent de zéro uniquement entre les instants $t_3$ et $t_4$, donc on a :

$$I_2 = \int_{t_3}^{t_4} \frac{Max(E_Y,0)}{P_{cons}} \, dt$$

Le calcul de la deuxième somme $I_2$ est représenté sur le troisième graphe de la figure 2, ou elle croît de 0 jusqu'à une valeur V2 atteinte à l'instant $t_4$.

Le module de réinitialisation REINIT permet de remettre ou réinitialiser à zéro les première et deuxième sommes $I_1$, $I_2$, lorsque ladite valeur absolue |ΔP| est nulle, après avoir traité ces sommes. En d'autres termes, les première et deuxième sommes $I_1$, $I_2$ sont réinitialisées à zéro dès que la pression d'admission $P_{adm}$ passe par la valeur de la pression de consigne. Conformément à l'invention, les sommes $I_1$, $I_2$, peuvent également être réinitialisées à zéro quand la pression de consigne n'est pas stable.

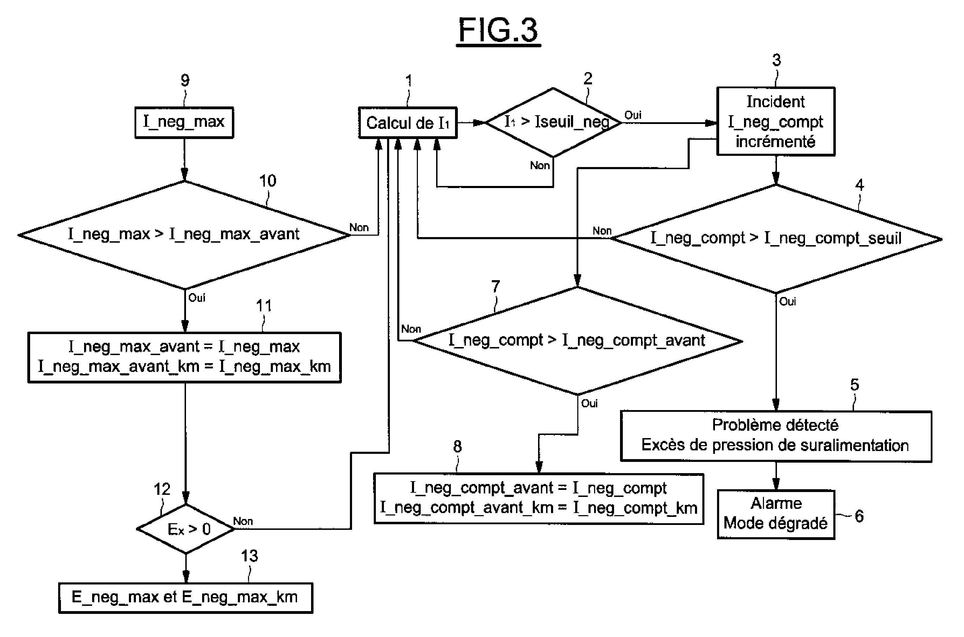

La figure 3 illustre un exemple de détection d'un excès de pression de suralimentation, comme représenté sur la figure 2 entre les instants $t_1$ et $t_2$.

Le premier module d'intégration INT1 calcule la première somme $I_1$ (étape 1). Le premier module de comparaison COMP1 compare ensuite la première somme $I_1$ avec un seuil de somme Iseuil_neg (étape 2). Si la première somme $I_1$ est supérieure au seuil de somme Iseuil_neg, un incident d'excès de pression de suralimentation est détecté, et le module de mise à jour MAJ incrémente de 1 la valeur d'un compteur I_neg_compt (étape 3). I_neg_compt représente le nombre d'incidents détectés d'excès de pression de suralimentation survenus lors du présent roulage.

Le deuxième module de comparaison COMP2 compare la valeur du compteur I_neg_compt avec une première valeur de compteur maximale prédéterminée I_neg_compt_seuil (étape 4). Si la valeur du compteur I_neg_compt est supérieure à la première valeur de compteur maximale prédéterminée I_neg_compt_seuil, le deuxième module de comparaison COMP2 détecte un problème d'excès de pression de suralimentation (étape 5), et le module MD de commande de fonctionnement du moteur dans un mode dégradé est activé, ainsi que le dispositif d'alarme AL (étape 6).

Le module de mise à jour MAJ compare la valeur du compteur I_neg_compt avec une valeur maximale I_neg_compt_avant (étape 7), et si la valeur du compteur I_neg_compt dépasse la valeur maximale I_neg_compt_avant, le module de mise à jour MAJ affecte la valeur du compteur I_neg_compt à la valeur maximale I_neg_compt_avant, et affecte le kilométrage I_neg_compt_km correspondant à l'incrémentation du compteur I_neg_compt à une valeur I_neg_compt_avant_km correspondant à la nouvelle valeur maximale I_neg_compt_avant (étape 8).

Le module de mise à jour MAJ met à jour une valeur maximale I_neg_max de la première somme calculée $I_1$ au cours du roulage (étape 9), compare la valeur I_neg_max à sa valeur maximale I_neg_max_avant lors des précédents roulages (étape 10), et si I_neg_max est supérieure à I_neg_max_avant, met à jour sa valeur maximale I_neg_max_avant, ainsi que le kilométrage associé I_neg_max_avant_km avec le kilométrage I_neg_max_km correspondant à I_neg_max (étape 11).

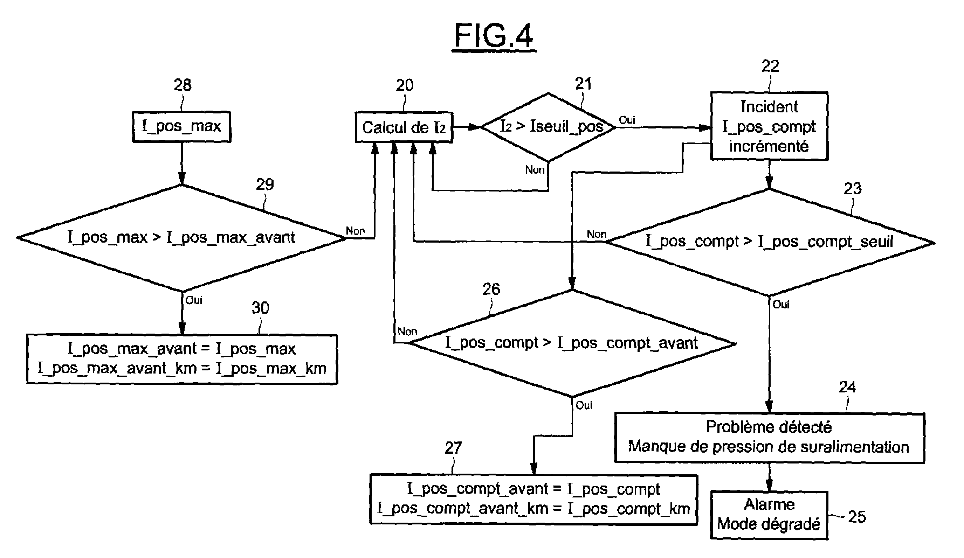

Le module de mise à jour MAJ teste si l'écart $E_x$ passe de négatif à positif (étape 12), et si c'est le cas, met à jour une valeur maximale de cet écart E_neg_max ainsi que le kilométrage associé (étape 13). Ceci est particulièrement intéressant pour les cas de détection d'excès de pression de suralimentation, et nettement moins pour les cas de détection de manque de pression de suralimentation, comme c'est le cas sur la figure 4.

La figure 4 illustre un exemple de détection d'un manque de pression de suralimentation, comme représenté sur la figure 2 entre les instants $t_3$ et $t_4$, de manière similaire au cas de détection d'un excès de pression de suralimentation illustré par la figure 3.

Le deuxième module d'intégration INT2 calcule la deuxième somme $I_2$ (étape 20). Le premier module de comparaison COMP1 compare ensuite la deuxième somme $I_2$ avec un seuil de somme Iseuil_pos (étape 21). Si la deuxième somme $I_2$ est supérieure au seuil de somme Iseuil_pos, un incident de manque de pression de suralimentation est détecté, et le module de mise à jour MAJ incrémente de 1 la valeur d'un compteur I_pos_compt (étape 22). I_pos_compt représente le nombre d'incidents détectés de manque de pression de suralimentation survenus lors du présent roulage.

Le deuxième module de comparaison COMP2 compare la valeur du compteur I_pos_compt avec une deuxième valeur de compteur maximale prédéterminée I_pos_compt_seuil (étape 23). Si la valeur du compteur I_pos_compt est supérieure à la deuxième valeur de compteur maximale prédéterminée I_pos_compt_seuil, le deuxième module de comparaison COMP2 détecte un problème de manque de pression de suralimentation (étape 24), et le module MD de commande de fonctionnement du moteur dans un mode dégradé est activé, ainsi que le dispositif d'alarme (étape 25).

Le module de mise à jour MAJ compare la valeur du compteur I_pos_compt avec une valeur maximale I_pos_compt_avant (étape 26), et si la valeur du compteur I_pos_compt dépasse la valeur maximale I_pos_compt_avant, le module de mise à jour MAJ affecte la valeur du compteur I_pos_compt à la valeur maximale I_pos_compt_avant, et affecte le kilométrage I_pos_compt_km correspondant à l'incrémentation du compteur I_pos_compt à une valeur I_pos_compt_avant_km correspondant à la nouvelle valeur maximale I_pos_compt_avant (étape 27).

Le module de mise à jour MAJ met à jour une valeur maximale I_pos_max de la deuxième somme calculée $I_2$ au cours du roulage (étape 28), compare la valeur I_pos_max à sa valeur maximale I_pos_max_avant lors des précédents roulages (étape 29), et si I_pos_max est supérieure à I_pos_max_avant, met à jour sa valeur maximale I_pos_max_avant, ainsi que le kilométrage associé I_pos_max_avant_km avec le kilométrage I_pos_max_km correspondant à I_pos_max (étape 30).

L'invention permet donc de détecter des problèmes d'excès ou de manque de pression de suralimentation en air du moteur, de manière plus fiable, quel que soit le fonctionnement du moteur.

De plus, l'invention permet de mémoriser des informations relatives aux problèmes de suralimentation survenus lors des roulages du véhicule, afin de permettre un diagnostic ultérieur précis.

## Revendications

1. Système de surveillance de la pression de suralimentation en air d'un moteur à combustion interne de véhicule automobile équipé d'un ensemble turbocompresseur de suralimentation destiné à accroître la pression d'admission des gaz dans le moteur, et d'une unité de commande électronique, **caractérisé en ce qu'**il comprend :

   - un module (DC) de détermination en continu de la pression d'admission ($P_{adm}$) des gaz du moteur, par exemple un capteur de pression ou un estimateur de pression ;
   - un premier module de calcul (CALC1) apte à calculer la valeur absolue ($|\Delta P|$) de la différence ($\Delta P$) entre la pression de consigne ($P_{cons}$) et la pression d'admission ($P_{adm}$) ;
   - un deuxième module de calcul (CALC2) apte à calculer un premier écart ($E_X$) entre ladite valeur absolue ($|\Delta P|$) et une première pression prédéterminée (X) ; et
   - un premier module d'intégration (INT1) apte à calculer une première somme ($I_1$) d'un rapport du maximum entre un premier écart ($E_X$) et zéro, et de ladite pression de consigne ($P_{cons}$).

2. Système selon la revendication 1, **caractérisé en ce qu'**il comprend, en outre :

   - un troisième module de calcul (CALC3) apte à calculer un deuxième écart ($E_Y$) entre ladite valeur absolue ($|\Delta P|$) et une deuxième pression d'admission (Y) inférieure à ladite première pression prédéterminée (X) ; et
   - un deuxième module d'intégration (INT2) apte à calculer une deuxième somme ($I_2$) d'un rapport du maximum entre un deuxième écart ($E_Y$) et zéro, et de ladite pression de consigne ($P_{cons}$).

3. Système selon la revendication 2, **caractérisé en ce qu'**il comprend, en outre un module de réinitialisation (REINIT) à zéro desdites première et deuxième sommes ($I_1$, $I_2$) lorsque ladite valeur absolue ($|\Delta P|$) est nulle, après traitement desdites sommes, ou lorsque la pression de consigne ($P_{cons}$) est instable.

4. Système selon la revendication 2 ou 3, **caractérisé en ce qu'**il comprend, en outre, un premier module de comparaison (COMP1) apte à comparer une dite première ou deuxième somme ($I_1$, $I_2$) avec un seuil de somme respectif prédéterminé (Iseuil_neg, Iseuil_pos), et de déterminer respectivement un incident d'excès ou de manque de pression de suralimentation en air du moteur.

5. Système selon la revendication 4, **caractérisé en ce qu'**il comprend, en outre :

   - un module de mémorisation (MEM) ;
   - un module de mise à jour (MAJ) de données mémorisées dans le module de mémorisation (MEM) ;
   - un premier compteur (I_neg_cotnpt) représentant le nombre d'incidents détectés d'excès de pression de suralimentation en air du moteur lors de l'actuel roulage, ledit premier compteur (I_neg_compt) étant initialisé à zéro au début de chaque roulage du véhicule, et mis à jour par le module de mise à jour (MAJ) durant chaque roulage du véhicule ; et
   - un deuxième compteur (I_pos_compt) représentant le nombre d'incidents détectés de manque de pression de suralimentation en air du moteur lors de l'actuel roulage, ledit deuxième compteur (I_pos_compt) étant initialisé à zéro au début de chaque roulage du véhicule et mis à jour par le module de mise à jour (MAJ) durant chaque roulage du véhicule.

6. Système selon la revendication 5, **caractérisé en ce qu'**il comprend en outre un deuxième module de comparaison (COMP2), apte à détecter un problème d'excès de pression de suralimentation lorsque ledit premier compteur (I_neg_compt) dépasse une première valeur de compteur maximale prédéterminée (I_neg_compt_seuil), et apte à détecter un problème de manque de pression de suralimentation lorsque ledit deuxième compteur (I_pos_compt) dépasse une deuxième valeur de compteur maximale prédéterminée (I_pos_compt_seuil).

7. Système selon la revendication 6, **caractérisé en ce qu'**il comprend, en outre, un dispositif d'alarme (AL) apte à se déclencher lors de la détection par le deuxième module de comparaison (COMP2) d'un problème d'excès ou de manque de pression de suralimentation, pour prévenir le conducteur du véhicule, et un module (MD) de commande de fonctionnement du moteur dans un mode dégradé après la détection par le deuxième module de comparaison (COMP2) d'un problème d'excès ou de manque de pression de suralimentation.

8. Système selon l'une quelconque des revendications 5 à 7, **caractérisé en ce que** le module de mise à jour (MAJ) est, en outre, apte, durant chaque roulage du véhicule, à mettre à jour :

- une valeur maximale (I_neg_max) de ladite première somme calculée ($I_1$), une valeur absolue maximale (E_neg_max) correspondante de premier écart ($E_X$) et un kilométrage associé (E_neg_max_km) du véhicule ; et
- une valeur maximale (I_pos_max) de ladite deuxième somme calculée ($I_2$), une valeur absolue maximale (E_pos_max) correspondante de deuxième écart ($E_Y$) et un kilométrage associé (E_pos_max_km) du véhicule ; ledit module de réinitialisation (REINIT) réinitialisant à zéro lesdites valeurs au début de chaque roulage du véhicule.

9. Système selon la revendication 8, **caractérisée en ce que** le module de mise à jour (MAJ) est, en outre, apte à mettre à jour :

- une valeur maximale (I_neg_max_avant) de la valeur maximale (I_neg_max) de ladite première somme calculée ($I_1$), et le kilométrage associé (I_neg_max_avant_km) du véhicule ; et
- une valeur maximale (I_pos_max_avant) de la valeur maximale (I_pos_max) de ladite deuxième somme calculée ($I_2$), et le kilométrage associé (I_pos_max_avant_km) du véhicule.

10. Système selon la revendication 9, **caractérisé en ce que** le module de mise à jour (MAJ) est, en outre, apte à mettre à jour :

- une valeur maximale (I_neg_compt_avant) du premier compteur (I_neg_compt), et le kilométrage associé (I_neg_compt_avant_km) du véhicule ; et
- une valeur maximale (I_pos_compt_avant) du deuxième compteur (I_pos_compt), et le kilométrage associé (I_pos_compt_avant_km) du véhicule.

11. Système selon la revendication 10, **caractérisé en ce que** lesdites valeurs prédéterminées et lesdits compteurs sont mémorisés dans le module de mémorisation (MEM).

12. Procédé de surveillance de la pression de suralimentation en air d'un moteur à combustion interne de véhicule automobile équipé d'un ensemble turbocompresseur de suralimentation destiné à accroître la pression d'admission des gaz dans le moteur, et d'une unité de commande électronique, **caractérisé en ce que** l'on détecte la présence ou l'absence d'un problème d'excès ou de manque de pression de suralimentation en air du moteur, à partir d'écarts ($E_X$, $E_Y$) entre la valeur absolue ($|\Delta P|$) de la différence ($\Delta P$) entre la pression de consigne ($P_{cons}$) et la pression d'admission ($P_{adm}$), et respectivement une première pression prédéterminée (X) ou une deuxième pression prédéterminée (Y).

# FIG.1

- DC
- $P_{adm}$
- UCE
- CALC1
- CALC2
- MEM
- INT1
- CALC3
- INT2
- REINIT
- COMP1
- MAJ
- COMP2
- MD
- AL

# FIG.2

## FIG.3

EP 1 624 175 A1

## FIG.4

28 I_pos_max

29 I_pos_max > I_pos_max_avant — Non

Oui

30 I_pos_max_avant = I_pos_max
I_pos_max_avant_km = I_pos_max_km

20 Calcul de I₂ → 21 I₂ > Iseuil_pos — Oui → 22 Incident I_pos_compt incrémenté

Non

23 I_pos_compt > I_pos_compt_seuil — Non

Oui

26 I_pos_compt > I_pos_compt_avant

Non

Oui

27 I_pos_compt_avant = I_pos_compt
I_pos_compt_avant_km = I_pos_compt_km

24 Problème détecté
Manque de pression de suralimentation

25 Alarme
Mode dégradé

**Office européen des brevets**

**RAPPORT DE RECHERCHE EUROPEENNE**

Numéro de la demande

EP 05 30 0592

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 196 25 887 A1 (BAYERISCHE MOTOREN WERKE AG, 80809 MUENCHEN, DE) 2 janvier 1998 (1998-01-02) * abrégé * | 12 | F02D41/22 F02D23/02 |
| A | * colonne 2, ligne 27 - ligne 44 * ----- | 1-11 | |
| X | US 6 425 247 B1 (SCHMID WOLFRAM) 30 juillet 2002 (2002-07-30) | 12 | |
| A | * abrégé * * colonne 2, ligne 12 - ligne 29 * * colonne 3, ligne 37 - colonne 4, ligne 53 * ----- | 1-11 | |
| A | US 2003/084886 A1 (AKAO YOSHIYUKI ET AL) 8 mai 2003 (2003-05-08) * abrégé * * alinéa [0041] * ----- | 1-12 | |
| A | WO 03/067060 A (HONEYWELL INTERNATIONAL INC) 14 août 2003 (2003-08-14) * le document en entier * ----- | 1-12 | **DOMAINES TECHNIQUES RECHERCHES (Int.Cl.7)** |
| A | DE 198 04 466 A1 (DAIMLERCHRYSLER AG, 70567 STUTTGART, DE; DAIMLERCHRYSLER AG) 12 août 1999 (1999-08-12) * le document en entier * ----- | 1-12 | F02D |

Le présent rapport a été établi pour toutes les revendications

| Lieu de la recherche | Date d'achèvement de la recherche | Examinateur |
|---|---|---|
| La Haye | 8 novembre 2005 | Libeaut, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................
& : membre de la même famille, document correspondant

EPO FORM 1503 03.82 (P04C02)

**EP 1 624 175 A1**

## ANNEXE AU RAPPORT DE RECHERCHE EUROPEENNE
## RELATIF A LA DEMANDE DE BREVET EUROPEEN NO.

EP 05 30 0592

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-11-2005

| Document brevet cité au rapport de recherche | | | Date de publication | Membre(s) de la famille de brevet(s) | | | Date de publication |
|---|---|---|---|---|---|---|---|
| DE | 19625887 | A1 | 02-01-1998 | AUCUN | | | |
| US | 6425247 | B1 | 30-07-2002 | BR | 9914056 | A | 19-06-2001 |
| | | | | DE | 19844212 | C1 | 27-05-1999 |
| | | | | WO | 0019079 | A1 | 06-04-2000 |
| | | | | EP | 1119698 | A1 | 01-08-2001 |
| US | 2003084886 | A1 | 08-05-2003 | DE | 10247428 | A1 | 28-05-2003 |
| | | | | JP | 2003120304 | A | 23-04-2003 |
| WO | 03067060 | A | 14-08-2003 | AU | 2003212932 | A1 | 02-09-2003 |
| | | | | EP | 1474597 | A1 | 10-11-2004 |
| | | | | US | 2003149522 | A1 | 07-08-2003 |
| | | | | US | 2003145591 | A1 | 07-08-2003 |
| DE | 19804466 | A1 | 12-08-1999 | AUCUN | | | |

EPO FORM P0460